# EUROPÄISCHE PATENTSCHRIFT

(11) **EP 0 777 835 B1**
(45) Veröffentlichungstag und Bekanntmachung des Hinweises auf die Patenterteilung: **27.11.2002**
(21) Anmeldenummer: 95931163.0
(22) Anmeldetag: 19.08.1995
(51) Int. Cl.: F16L 55/162, F16L 55/165

(54) **VERFAHREN ZUR SANIERUNG VON VER- UND ENTSORGUNGSLEITUNGEN UND SCHÄCHTEN**
PROCESS FOR RENOVATING FEED AND DISCHARGE PIPES AND SHAFTS
PROCEDE DE RENOVATION DE CONDUITES ET DE PUITS D'ALIMENTATION ET D'ELIMINATION

(30) Priorität: 24.08.1994 DE 4429951
(43) Veröffentlichungstag der Anmeldung: 11.06.1997
(73) Patentinhaber: TS Bau GmbH, 45473 Mühlheim a.d. Ruhr (DE)
(72) Erfinder: BÜSSING, Reinhard, D-58313 Herdecke (DE)
(74) Vertreter: Thiel, Christian, Dr. Dipl.-Chem.
(86) Internationale Anmeldenummer: EP9503300
(87) Internationale Veröffentlichungsnummer: WO96006298

(56) Entgegenhaltungen:
- EP-A- 0 393 433
- WO-A-89/00481
- WO-A-91/10862
- DE-U- 8 803 049
- US-H- H1 163

## Beschreibung

Die Erfindung betrifft ein Verfahren zur Sanierung von Ver- und Entsorgungsleitungen und -schächten, bei dem ein Inliner und Distanzelemente in die Leitung oder den Schacht eingebracht und der Ringraum zwischen Inliner und Leitungs- oder Schachtwand mit einer aushärtenden Masse verfüllt wird.

Mit der Industriealisierung in der zweiten Hälfte des vorigen Jahrhunderts und der damit verbundenen Bevölkerungszunahme wurde damit begonnen, zunächst die Bevölkerungszentren der Industrieländer mit einem System von Rohrleitungen zur Ver- und Entsorgung zu versehen. Für die Gas- und Wasserversorgung wurden dabei hauptsächlich gußeiserne Leitungen verwandt, überwiegend Grauguß, ein ausgesprochen dauerhaftes Material, das insbesondere auch bei der Wasserversorgung die Wasserqualität nicht beeinträchtigt und in Abwesenheit von Sauerstoff wenig korrodiert. Viele der in den 80iger Jahren des vorigen Jahrhunderts verlegten Leitungen sind entsprechend noch heute in Betrieb, weisen aber inzwischen doch erhebliche innere und äußere Korrosionsschäden auf, so daß es zunehmend zu Undichtigkeiten und dadurch bedingt zu Verlusten kommt. Bei Gasleitungen kommt hinzu, daß sie, soweit sie auf die Verteilung von Stadtgas ausgelegt sind, bei Betrieb mit Erdgas häufig undicht werden. Ältere Leitungen weisen mit Teer getränkte textile Dichtungen auf, die für ihre Dichtwirkung auf den relativ hohen Feuchtigkeitsgehalt des Stadtgases angewiesen sind. Bei dem relativ geringen Feuchtigkeitsgehalt des jetzt eingespeisten Erdgases schrumpfen diese Materialien und werden undicht.

Entsprechendes gilt für Abwasserleitungen soweit sie aus Gußeisen hergestellt sind, was bei kleineren Querschnitten häufig der Fall ist, und für die Kanalisation, die, soweit Leitungen größeren Querschnitts betroffen sind, in der Regel aus Beton, Steinzeug, Asbestzement oder ähnlichen Materialien besteht. Auch hier sind Leitungen älteren Datums inzwischen durch Korrosion und mechanische Belastung, wie sie durch Verkehrserschütterungen, Druckbelastung oder Erdbewegungen im Rahmen von Tiefbaumaßnahmen oder in Bergbaugebieten auftreten, vielfach schadhaft und sanierungsbedürftig. Hinzu kommt die mechanische Beanspruchung durch die Geschiebefracht vor allem der Straßenabwässer.

Es hat sich gezeigt, daß die über Jahrzehnte aufgebauten Leitungsnetze in ihren älteren Teilen dringend sanierungsbedürftig sind, wobei sich gerade die Schäden, die durch Erschütterungen und hohe Belastung bedingt sind, in den letzten Jahren vervielfältigt haben. Es besteht deshalb ein erheblicher Sanierungsbedarf, der noch dadurch verstärkt wurde, daß die Kommunen, in deren Besitz die Leitungsnetze zumeist sind, in der Vergangenheit zu wenig Geld in den Erhalt ihrer Leitungsnetze investiert haben. Der Sanierungsbedarf hat sich dadurch kumuliert.

Aber auch gegenwärtig ist eine vollständige Sanierung der Leitungsnetze durch Austausch defekter und alter Leitungen wegen der weiterhin bestehenden Finanznot der Kommunen nicht möglich. Es besteht deshalb ein Bedarf an Sanierungsverfahren, mit denen defekte Leitungen des Ver- und Entsorgungsnetzes kostengünstig saniert werden können.

Die DE-U 88 03 049 offenbart eine Innenauskleidung für Röhren als Schutz gegen chemische Angriffe und Korrosion die ein Inliner aus Kunststoff oder Keramik und einen geschirmten Kunststoff aufweist. Der Schaumkunststoff dient als thermische Isolierung um den äußeren Stahlmantel und die innere Keramik oder Kunststoffschichten der Röhre miteinander zu verbinden. Somit entsteht ein Verbundrohr, welches gegen die vorgenannten chemischen Angriffe und Korrosionen beständig wird. Dieses System dient jedoch nicht dazu, bereits vorhandene Schäden zu beseitigen. Die US-H1163 offenbart ein Verfahren bei dem ein starrer, vorgefertigter Inliner der aus Glasfaser besteht in Stahlrohrleitungen eingeführt und anschließend mit einer Kunststoffmasse unterfüllt wird. Der Inliner verbleibt in der Rohrleitung und bildet eine neue Innenwandung der Leitung aus. Nachteilig hierbei ist, daß eine statische Stabilisierung nur über den Inliner erfolgt.

Die WO 91/10862 offenbart ein Verfahren, bei dem zunächst eine Noppenfolie in die zu sanierende Leittung eingebracht und durch Druckbeaufschlagung gegen die Leitungswand gepreßt wird und dann der Ringraum zwischen Folienschlauch und Leitungswandung mit einer Betonmasse verfüllt wird. Die neue Wandung der sanierten Leitung wird dabei von der Innenwand des Folienschlauches gebildet. Dieses Verfahren führt aber zu einer unzureichenden Stabilisierung der ursprünglichen Leitung in Schadensbereichen. Risse werden nicht vollständig ausgefüllt und Auswaschungen außerhalb der Leitungen werden nicht verfüllt, so daß es zu Einbrüchen kommen kann, die die Erdoberfläche erreichen und die Stabilität auch der sanierten Leitung gefährden.

Der Erfindung liegt die Aufgabe zugrunde, ein Verfahren bereitzustellen, mit dem bestehende Leitungen kostengünstig für den weiteren Gebrauch hergerichtet und insbesondere abgedichtet werden können. Dabei muß das Verfahren geeignet sein, sowohl bestehende Schäden aufgrund von Rissen, Korrosionserscheinungen oder Brüchen abzudichten als auch zukünftigen Schäden vorzubeugen, so daß sich die Sanierung der Leitungen nicht in der vorübergehenden Reparatur von Schäden erschöpft, sondern eine dauerhafte Lösung für die weitere Nutzung der Leitungen bereitstellt. Insbesondere ist bei der Sanierung von Versorgungsleitungen sicherzustellen, daß durch diese Leitungen geführtes Trinkwasser durch die Sanierungsmaßnahme nicht beeinträchtigt wird. Die Sanierung muß bei Gasleitungen zu einer dauerhaften Gasdichtigkeit der sanierten Leitungen führen und bei Abwasserleitungen den verschiedenen im Abwasser vorhandenen korrosiven Stoffen dauerhaft widerstehen können. Die Beschichtungen von Abwasserleitungen sollen zudem beständig gegen die Geschiebefracht sein.

Diese Aufgabe wird mit einem Verfahren zur Sanierung von Ver- und Entsorgungsleitungen und- schächten, bei dem ein Inliner und Distanzelemente in die Leitung oder den Schacht eingebracht und der Ringraum zwischen Inliner und Leitungs- oder Schachtwand mit einer aushärtenden Masse verfüllt wird, gelöst, worin als Inliner ein Folienschlauch verwandt wird und der Ringraum mit einem aushärtenden Kunststoffmaterial verfüllt wird, das zur Ausbildung einer geschlossenen Zellstruktur ein Treibmittel und 50 bis 95 Gew.-% mineralische Füllstoffe enthält.

Es hat sich überraschend gezeigt, daß selbst über 100 Jahre alte Versorgungsleitungen mit einer elastischen Kunststoffschicht derartig ausgekleidet und abgedichtet werden können, daß sie allen Anforderungen standhalten. Es ist ohne weiteres möglich, Versorgungsleitungen mit einer trinkwassergerechten Auskleidung bzw. Wandbeschichtung zu versehen und Gasleitungen dauerhaft abzudichten. Die Auskleidung mit Kunststoff bringt eine hinreichende Elastizität mit sich, um auch Erschütterungen und weiteren Brüchen des umgebenden Rohrmaterials standzuhalten. Die ausgehärteten Kunststoffmaterialien sind durchaus korrosionsbeständiger als bekannte Rohrleitungsmaterialien, was Abwasserleitungen anbetrifft. Risse in der alten Rohrleitung werden ausgefüllt, ebenso Auswaschungen in der Umgebung, die durch Risse zugänglich sind.

Es versteht sich, daß das erfindungsgemäße Verfahren sowohl zur Sanierung von sanierungsbedürftigen Leitungen und Schächten verwandt werden kann als auch zur Beschichtung der Innenwandung von neu erstellten Leitungen und Schächten. Das Verfahren hat sich als ausgesprochen "schnell" erwiesen: Versorgungsleitungen können abschnittsweise binnen 24 Stunden gebrauchsfertig saniert werden.

Im allgemeinen wird so vorgegangen, daß für die Beschichtung vorgesehene Leitungen zunächst verfahrensgemäß hergerichtet werden. Dies beinhaltet die Säuberung der zur Beschichtung vorgesehenen Wandung, falls notwendig, mit Hilfe mechanischer, chemischer oder physikalischer Methoden, wobei einer mechanischen Reinigung mit Hilfe abrasiv wirkender Mittel der Vorzug gegeben wird. Insbesondere bei Leitungen mit kleinem Durchmesser kann auch eine Reinigung mit chemischen Mitteln stattfinden. Von den Wandungen abgetragenes Material wie auch etwa in der Leitung befindliche Ablagerungen brauchen vor der Aufbringung des Kunststoffmaterials nicht restlos entfernt zu werden.

Im Anschluß an die Säuberung der Leitung ist es ggf. erforderlich, die zu beschichtende Wandung soweit zu entfeuchten, daß die Restfeuchte keine nachteiligen Auswirkungen auf die auszubringende Kunststoffschicht mehr haben kann. Die Entfeuchtung kann dadurch vorgenommen werden, daß die Leitung mit Luft oder Inertgas mit geringem Feuchtigkeitsgehalt oder mit trockener Heißluft gespült wird. In der Regel ist es aber völlig ausreichend, anstehende Feuchtigkeit zusammen mit den Rückständen der mechanischen Reinigung abzustreifen und auszutragen, beispielsweise mit Hilfe von Gummischeiben.

Die Schalung besteht aus einem Folienschlauch, der auf Distanzelemente aufgebracht wird und nach erfolgreicher Durchführung des erfindungsgemäßen Verfahrens wieder entfernt wird. In diesem Fall bestehen die Distanzelemente vorzugsweise aus einem schlauchförmigen Gitter- oder Netzgewebe, das auf seiner Außenseite Distanzelemente oder -halter aufweist, die den Schlauch gegen die Wandung der Leitung oder des Schachtes abstützen. Verwandt werden können beispielsweise aber auch Spiralelemente, die einen Ringraum zwischen der zu sanierenden Leitung und der eingezogenen Schlauchfolie zu definieren vermögen. Die Materialien dieser Distanzelemente sind im Grunde genommen beliebig, wobei aber korrosionsbeständige Kunststoffmaterialien, wie sie herkömmlicherweise in der Ver- und Entsorgungstechnik eingesetzt werden, bevorzugt sind. Für die Noppen- und Schlauchfolien haben sich beispielsweise Polyethylen und Polypropylen sowie deren Copolymere bewährt.

Wird eine entfernbare Schlauchfolie als Schalung eingesetzt, ist diese vorzugsweise transparent ausgebildet, so daß nach Ausbringen des Kunststoffmaterials eine Härtung mit dafür geeigneter Strahlung durch das Kunststoffmaterial hindurch möglich ist.

In jedem Fall ist erforderlich, daß die Noppen- oder Schlauchfolie aus einem druckbeständigen Material besteht, das mit Preßluft oder Wasser beaufschlagt werden kann. Hierdurch wird sichergestellt, daß auch bei Einpressen des Kunststoffmaterials in den Ringraum unter Druck der durch die eingezogene Noppen- oder Schlauchfolie definierte Leitungsweg der sanierten Leitung einen gewünschten Querschnitt aufweist.

Im nächsten Schritt wird ein zur Aushärtung befähigtes Kunststoffmaterial in den Ringraum eingebracht. Das Kunststoffmaterial soll bei der Aushärtung eine so große Festigkeit erreichen, daß eine stützende und stabilisierende Kunststoffschicht auf der Innenwandung der Leitung oder des Schachtes entsteht. Die Restelastizität soll aber hoch genug sein, daß die Kunststoffschicht Erschütterungen der Leitung, Bewegungen und mechanischen Belastungen standhalten kann und auch bei Rissen in der umgebenden Rohrwandung nicht undicht wird.

Zweckmäßigerweise wird das Kunststoffmaterial in den Ringraum zwischen alter Leitung und Inliner eingepreßt, wobei Zahnrad- oder Schneckenpumpen zum Einsatz kommen können. Das Verfüllen kann dadurch erleichtert werden, daß an das Ende der zu verfüllenden Strecke, die in der Regel eine Länge von 30 bis 150 m aufweist, ein Vakuum angelegt wird. Das Einpressen des Kunststoffmaterials führt dazu, daß selbst Haarrisse in der zu sanierenden Leitung ausgefüllt werden und Leitungsdurch- und -durchbrüche in das umgebende Erdreich mit versiegelt werden, wobei das Kunststoffmaterial auch durch derartige Risse hindurch tritt und sich auf der Außenseite pilzförmig verbreitert und dadurch eine Versiegelung herbei führt.

Die Schichtdicke der Kunststoffschicht im Ringraum der Leitung oder des Schachtes beträgt zweckmäßigerweise 3 bis 30 mm, vorzugsweise 5 bis 15 mm. Die Schichtdicke ist dabei von dem Leitungsquerschnitt abhängig wie auch vom Ausmaß der auszugleichenden Schäden bzw. Unebenheiten an der Rohrwandung. Einerseits dürfen kleine Leitungsquerschnitte durch die eingebrachte Kunststoffschicht nicht zu stark eingeengt werden, andererseits muß die Stärke der eingebrachten Kunststoffschicht ausreichen, Risse, Poren und Beschädigungen in der Rohrwandung auszugleichen. Zugleich muß über eine hinreichende Schichtdicke des ausgehärteten Kunststoffmaterials eine Mindeststandzeit der damit ausgekleideten Leitung garantiert werden.

Für das erfindungsgemäße Verfahren geeignete härtbare Kunststoffmaterialien sind solche, die eine ausreichende Beständigkeit gegenüber dem zu transportierenden Medium aufweisen. Dies bedeutet insbesondere, daß die Kunststoffmaterialien nach der Aushärtung vor allem wasser- und gasdicht sein müssen und durch Feuchtigkeit nicht angegriffen werden dürfen. Wird das erfindungsgemäße Verfahren auf zu sanierende Kanalisationen angewandt, kommt noch die Korrosionsbeständigkeit gegenüber in Abwässern üblichen korrosiv wirkenden Stoffen, wie beispielsweise Säuren, Laugen und Salzen, sowie gegenüber der Geschiebefracht hinzu. Eine Vielzahl von Kunststoffsystemen ist bekannt, die diese Anforderungen erfüllen.

Besonders geeignete Kunststoffmaterialien für das erfindungsgemäße Verfahren sind Polyurethan-Systeme, Acrylsysteme, Epoxidsysteme und Systeme auf Basis ungesättigter Polyester, die alle auf dem einen oder anderen Weg zur Aushärtung befähigt sind. Ein Vorteil aller dieser Systeme ist ihre geringe Feuchtigkeitsempfindlichkeit.

Geeignete Polyurethan-Systeme beruhen auf Polyurethanprepolymeren mit einem Rest reaktionsfähiger Isocyanatgruppen, die aus monomeren oder polymeren mehrfunktionellen Isocyanaten und mehrfunktionellen Reaktionspartnern, in der Regel Polyolen, Polyetherolen oder Polyesterolen hergestellt sind. Diese Prepolymere werden zur Aushärtung mit mehrfunktionellen Reaktionspartnern mit mindestens zwei freien, zur Umsetzung mit den Isocyanatgruppen verfügbaren OH-, SH- und/oder NH-Gruppen und ggf. den aus der Polyurethanchemie dem Fachmann bekannten, die Reaktion aktivierenden Zusatzmitteln umgesetzt. Beispielsweise seien hier genannt Wasser, Polyole, wie Ethylenglykol, Propylenglykol oder deren Oligomere, Polyesterole, Polyetherole, multifunktionelle Thiole oder Polyamine und deren Mischungen. Die Härtung beschleunigende Zusätze sind beispielsweise tertiäre Amine oder Metallsalze. Es handelt sich hierbei um Zweikomponentensysteme.

Des weiteren können Acryl-Systeme eingesetzt werden, d. h. Reaktionsprodukte, die durch radikalische Polymerisation ein- oder mehrfunktioneller monomerer oder oligomerer Derivate der Acryl- oder Methacrylsäure hergestellt werden. Insbesondere sind hier die Ester der Acyrl- und Methacrylsäure zu nennen. Die Polymerisation kann durch Einmischen von Reaktionsstartern in die Ausgangsmischung eingeleitet werden, beispielsweise von Radikalstartern auf Peroxidbasis oder dergleichen. Des weiteren kann die Aushärtung bzw. Vernetzung durch energiereiche Strahlung eingeleitet werden, beispielsweise UV-Licht oder Elektronenstrahlung. Es versteht sich, daß unter Acryl-Systemen auch Copolymerisate von (Meth)acrylsäure und deren Derivaten verstanden werden.

Erfahrensgemäß können ferner Epoxidharz-Systeme zum Einsatz kommen, d. h. Reaktionsprodukte aus höhermolekularen Verbindungen mit mindestens zwei reaktionsfähigen Epoxidgruppen und mehrfunktionellen Polyaminen, Polyaminoamiden oder Gemischen dieser Stoffe, denen aus der Epoxidchemie bekannte Reaktionsbeschleuniger zugesetzt werden können. Die Polyamine übernehmen dabei die Funktion der Härterkomponente.

Weiterhin kommen Systeme auf Basis ungesättigter Polyester in Frage, d. h. Reaktionsprodukte der radikalischen Polymerisation ungesättigter Polyester. Solche ungesättigten Polyester ergeben sich aus der Umsetzung mehrfunktioneller Alkohole mit ein- oder mehrfach ungesättigten mehrfunktionellen Carbonsäuren. Diese ungesättigten Polyester können in zu radikalischer Polymerisation befähigten Monomeren gelöst werden, beispielsweise Styrol oder Divinylbenzol, aber auch in Diallylphthalat und monomeren Acrylsäure- oder Methacrylsäurederivaten, etwa Estern, wie Methylacrylat oder Methylmethacrylat. Die Polymerisation wird durch Zumischen geeigneter Reaktionsstarter in die Harzmischung und/oder durch die Zufuhr von Energie (Wärme) oder energiereicher Strahlung (UV-Licht oder Elektronenstrahlung) gestartet.

Alle diese Systeme können übliche Zusatzstoffe enthalten, beispielsweise Füllstoffe, Fasern, Farbstoffe, Stabilisatoren, Viskositätsregulierer und dergleichen. Sie können ferner durch Zusatz von Treibmitteln so modifiziert sein, daß sich während der Abbindereaktion eine ganz oder teilweise zellige Struktur ausbildet. Insbesondere der Zusatz von die Dauerhaftigkeit und Festigkeit der Kunststoffbeschichtung erhöhenden Materialien, beispielsweise mineralischen Füllstoffen und/oder verstärkenden Fasern, kann ausgesprochen zweckmäßig sein.

Als Füllstoffe kommen insbesondere solche mineralischer Natur in Frage, beispielsweise Quarzsand, Elektrofilterasche, und dergleichen. Besonders bevorzugter Zuschlag aufgrund seines inerten Verhaltens, seines Preisniveaus und seines spezifischen Gewichts ist Quarzsand. Die mineralischen Zuschläge können 2 bis 95 Gew.% des Kunststoffmaterials ausmachen, insbesondere 50 bis 90 Gew.%. Als besonders geeignet hat sich eine Mischung aus 1 Teil Epoxidharz und 5 Teilen Quarzsand erwiesen, wobei dem Epoxidharz ein übliches Treibmittel zur Ausbildung eines feinporigen geschlossenzelligen Schaums mit einer Dichte im Bereich von 0,8 bis 2,0 g/cm³, je nach Füllgrad, zugemischt ist.

Zusätzlich zu mineralischen Füllstoffen oder alternativ dazu können Fasern in einer zur Erhöhung der Festigkeit erforderlichen Menge im Kunststoffmaterial vorhanden sein. Beispiele für geeignete Fasern sind Polypropylen-Stapelfasern, Stahlfasern oder mineralische Fasern, wie beispielsweise Glas- oder Steinwolle. Im allgemeinen sind Faseranteile von 0,5 bis 5 Gew.% im Kunststoffmaterial vollständig ausreichend.

Es versteht sich, daß die zum Einsatz kommenden Kunststoffmaterialien und Härter an und für sich bekannt sind.

Soweit das auf die Wandung der Leitung oder des Schachtes aufgebrauchte Kunststoffmaterial unmittelbar mit einem Härter versetzt wird, erfolgt die Härtung über den für das Material typischen Zeitraum ohne weitere äußere Einflußnahme. Erfolgt die Aushärtung des Kunststoffmaterials durch Strahlung oder Wärmezufuhr, ist es erforderlich, im Anschluß an die Aufbringung des Kunststoffmaterials die Schicht zu bestrahlen oder mit Wärme zu beaufschlagen, was durch den Inliner hierdurch erfolgen kann.

Das erfindungsgemäße Verfahren ist vor allem zur Sanierung bestehender Leitungssysteme vorgesehen. Soweit diese Leitungssysteme nicht begehbar sind, ist es erforderlich, die einzelnen Verfahrensschritte mit Hilfe von dazu geeigneten Sonden vorzunehmen. Hierzu werden Leitungen in Abständen geöffnet, zumeist an Stellen, an denen ohnehin Schieber oder Schächte, Krümmer, Hydranten oder dergleichen vorgesehen sind. Die eröffneten Leitungen werden dann abschnittsweise saniert, wobei ggf. zunächst einmal eine Inspektionssonde eingeführt wird, mit der der Leitungszustand im einzelnen festgestellt werden kann. Solche Inspektionssonden bestehen beispielsweise aus einem Kamerasystem, das auf einen Wagen oder Schlitten montiert ist, der dimensionsmäßig auf den Leitungsquerschnitt abgestimmt ist und sich beispielsweise allseitig auf Rädern, Gleitkufen, Federn oder Bürsten gegen die Rohrwandung abstützt. Solche Sonden, die entweder durch die Leitung gezogen werden oder aber mit einem eigenen Antrieb versehen und ferngesteuert sind, sind bekannt.

Nach der Inspektion der Leitung und Feststellung des Sanierungsbedarfs, soweit erforderlich, wird mit Hilfe einer Reinigungssonde die Rohrwandung bearbeitet, um korrodiertes oder unebenes Material und Ablagerungen zu beseitigen und/oder die Wandung zu glätten. Bevorzugt ist eine mechanische Reinigung mit Bürsten, Kratzern oder rotierenden Federsystemen, die auf einem Schlitten montiert sein können oder aber durch die Leitung gezogen werden. Möglich ist auch die Reinigung durch Sandstrahlen. Die Reinigung umfaßt ggf. auch den Abtransport des Strahlmaterials wie auch des entfernten Guts, beispielsweise durch einen Spülvorgang, bevorzugt aber durch ein System von Gummischeiben, mit denen das Gut zusammen mit anstehender Freuchtigkeit abgestreift und ausgetragen wird.

Zur Verbesserung der Haftung des Kunststoffmaterials auf der Leitungswandung kann es zweckmäßig sein, eine Grundierung aufzubringen. Solche Grundierungen sind für das jeweils verwandte Kunststoffmaterial bekannt. Die Grundierungen sind geeignet, einer Hinterwanderung der Kunststoffschicht auf der Leitungswandung entgegenzutreten, insbesondere bei neu auftretenden Leitungsschäden und bei Neuanschlüssen an das Leitungsnetz.

Im Anschluß daran werden die Distanzelemente, ggf. zusammen mit dem Inliner in Form eines Noppenfolienschlauches, in die Leitung eingezogen, wobei die Dimensionen auf den Leitungsquerschnitt abgestimmt sind und die Länge der Distanzelemente der vorgesehenen Schichtdicke der Kunststoffauskleidung entspricht. Werden Distanzelemente in Form eines mit Distanzhaltern versehenen Gitterschlauches oder in Form Spiralelementen verwandt, wird ein separater Inliner benötigt, der unmittelbar anschließend in die Leitung eingebracht werden kann, beispielsweise durch Einblasen oder Einziehen und anschließendes Aufblasen, oder aber zu einem späteren Zeitpunkt, unmittelbar nach Aufbringen des Kunststoffmaterials. Ist ein Inliner vorhanden, wird dieser von innen heraus mit Druck beaufschlagt, beispielsweise über Preßluft oder durch Einpumpen von Wasser mit einem Druck von bis zu 3 Bar.

Ist ein Inliner vorhanden, wird das zum Verfüllen vorgesehene Kunststoffmaterial mit Pumpen unter Druck in den Ringraum gepreßt, wobei zur Unterstützung des Fließvorganges an das andere Leitungsende ein Vakuum angelegt werden kann. Falls ein chemischer Härter benötigt wird, wird dieser beim Einpressen zugemischt. Muß mit Hilfe von Wärme oder Strahlung gehärtet werden, kann dies durch den Inliner hindurch erfolgen, beispielsweise indem dieser mit Heißluft oder Heißwasser beaufschlagt wird oder indem eine Strahlungsquelle auf einem Schlitten hindurchgezogen wird.

Ist ein Inliner nicht vorhanden, kann das Kunststoffmaterial auch mit Hilfe eines Schleuderkopfes, der auf einem Schlitten montiert ist, unmittelbar auf die Wand aufgespritzt oder aufgeschleudert werden. Auch in diesem Fall kann dem Kunststoffmaterial unmittelbar bei der Ausbringung mit Hilfe eines üblichen Statikmischers, der aber an die Schleuderbewegung des Schleuderkopfes angepaßt ist, Härter zugemischt werden. In diesem Fall wird der Inliner erst unmittelbar im Anschluß an die Aufbringung des Kunststoffmaterials eingezogen bzw. eingeblasen und mit Preßluft oder Wasser beaufschlagt, um eine glatte Innenwandung zu erzielen. Zweckmäßigerweise wird so eingeblasen, daß die Schlauchfolie einseitig verschlossen wird, mit ihrem offenen Ende in das Sanierungsstück der Leitung eingelegt wird und mit Preßluft eingeblasen wird, so daß sich das geschlossene Ende durch den Schlauch hindurch in die Leitung hinein bewegt und unmittelbar an die Wand anlegt. Anschließend wird Druck aufgegeben und die Folie an der Wand belassen bis das Kunststoffmaterial endgültig ausgehärtet ist.

Einmündungen und Verzweigungen in den sanierten Leitungen werden auf bekannte Weise offengehalten bzw. geöffnet, beispielsweise durch Aufbohren mit Hilfe dazu geeigneter und konstruierter Roboter, wie sie auf diesem Gebiet bekannt sind, oder per Hand in begehbaren Leitungen. Die Auskleidung des sanierten Rohres wird dann an das Einmünderohr angeglichen, wobei von Vorteil ist, daß sich die genannten Kunststoffmaterialien ohne weiteres an bereits bestehende Schichten oder Beschichtungen in anderen Leitungen anschließen lassen.

Im Anschluß an die Einbringung des Kunststoffmaterials wird dies, sofern es den Härter bereits eingemischt enthält, über die erforderliche Zeit aushärten gelassen. Insbesondere die Polyurethan- und Epoxidharzsysteme, die den Härter und Härtungsbeschleuniger zugemischt enthalten, benötigen hierzu keine äußeren Einflüsse, allenfalls eine Steuerung der Temperaturbedingungen. Bei Acryl- und Polyestersystemen, die aufgrund einer Radikalkettenreaktion aushärten, kann die Zufuhr von Wärme oder der Kettenstart mit Hilfe einer Strahlungsquelle erforderlich sein. Wird die Kettenreaktion mit Hilfe einer Strahlenquelle ausgelöst, kann diese unmittelbar im Anschluß an die Ausbringung des Kunststoffmaterials zur Einwirkung gebracht werden, mit Hilfe einer Sonde, die durch den transparenten Inliner gezogen wird. Ist zum Start der Radikalkettenreaktion Wärme vorgesehen, was beispielsweise bei wärmeempfindlichen Radikalstartern im Kunststoffmaterial der Fall ist, kann diese Wärme in Form von Heißluft zugeführt werden oder aber auch in Form von Wärmestrahlung über beispielsweise eine auf einer Sonde montierte Infrarotquelle oder durch Verwendung von Heißwasser im Inliner.

Kunststoffmaterialien, die durch den Zusatz von Treibmitteln zellige Strukturen ausbilden, sind von Vorteil, beispielsweise aufgrund ihrer Elastizität und ihrer Isolierwirkung. Besonders vorteilhaft sind aber Zellstrukturen mit geschlossenen Poren wegen ihres Vermögens, fehlerhafte Strukturen der zu sanierenden Leitungen auszufüllen und zu hinterwandern. Es wurde gefunden, daß mit Treibmitteln versetzte Kunststoffmaterialien, insbesondere auf Epoxidbasis, tief in fehlerhafte Strukturen der Leitungen, wie Löcher, Haarrisse, Auswaschungen und dergleichen, einzudringen vermögen und diese fehlerhaften Strukturen vollständig ausfüllen. Durch die Wandung der alten Leitung reichende Risse werden vollständig bis in das umgebende Erdreich hinein durchdrungen und verschlossen; eine pilzartige Ausdehnung auf der Außenseite der sanierten Leitung fördert zudem den Verbund zwischen alter Leitung und neuer Kunststoffbeschichtung. Auch größere Auswaschungen in der Umgebung werden zuverlässig ausgeschäumt, sofern durch Risse in der Leitungswand zugänglich, und damit Tagbrüche vermieden.

Als Treibmittel werden aus der Kunststofftechnik bekannte Materialien verwandt. So kann bei Polyurethanen Wasser als Härterkomponente eingesetzt werden, das bei der Vernetzung zur Abspaltung von CO₂ führt, das wiederum die Schaumbildung fördert. Für die anderen Kunststoffsysteme werden übliche Treibmittel eingesetzt, die bei Wärmebehandlung oder unter den Polymerisationsbedingungen Treibgase abspalten, beispielsweise CO₂, N₂ oder dergleichen. Die für den Zerfall des Treibmittels benötigte Wärme kann dabei von außen zugeführt werden, wie zuvor beschrieben, oder aus der Reaktionswärme bei der Aushärtung des Kunststoffes stammen.

Im Anschluß an die Einbringung des Kunststoffmaterials und dessen Aushärung wird der Inliner, sofern er nicht als Innenwandung in der Leitung verbleibt, was bei herkömmlichen Noppenschlauchfolien der Fall ist, entfernt.

## Patentansprüche

1. Verfahren zur Sanierung von Ver- und Entsorgungsleitungen undschächten, bei dem ein Inliner und Distanzelemente in die Leitung oder den Schacht eingebracht und der Ringraum zwischen Inliner und Leitungs- oder Schachtwand mit einer aushärtenden Masse verfüllt wird,
**dadurch gekennzeichnet, daß** als Inliner ein Folienschlauch verwandt wird und der Ringraum mit einem aushärtenden Kunststoffmaterial verfüllt wird, das zur Ausbildung einer geschlossenen Zellstruktur ein Treibmittel und 50 bis 95 Gew.-% mineralische Füllstoffe enthält.

2. Verfahren nach Anspruch 1, **dadurch gekennzeichnet, daß** das Kunststoffmaterial in einer Dicke von 3 bis 30 mm, vorzugsweise 5 bis 15 mm eingebracht wird.

3. Verfahren nach einem der vorstehenden Ansprüche, **dadurch gekennzeichnet, daß** als Kunststoffmaterial ein Polyurethan-, Acryl-, Epoxidoder ungesättigtes Polyestersystem eingesetzt wird.

4. Verfahren nach einem der Ansprüche 1 bis 3, **dadurch gekennzeichnet, daß** das Kunststoffmaterial durch Strahlung oder Wärme gehärtet wird.

5. Verfahren nach einem der Ansprüche 1 bis 3, **dadurch gekennzeichnet, daß** das Kunststoffmaterial chemisch gehärtet wird.

6. Verfahren nach Anspruch 1 bis 5, **dadurch gekennzeichnet, daß** das Kunststoffmaterial 50 bis 95 Gew.-% mineralische Füllstoffe enthält.

7. Verfahren nach Anspruch 6, **dadurch gekennzeichnet, daß** als Füllstoff Quarzsand verwandt wird.

8. Verfahren nach einem der Ansprüche 1 bis 7, **dadurch gekennzeichnet, daß** als Inliner ein Folienschlauch verwandt wird, der als Distanzelemente nach außen gerichtete Distanznoppen aufweist.

9. Verfahren nach einem der Ansprüche 1 bis 7, **dadurch gekennzeichnet, daß** als Distanzelement ein Netzschlauch mit Distanzhaltern oder ein Spiralelement verwandt wird.

10. Verfahren nach Anspruch 9, **dadurch gekennzeichnet daß** als Inliner eine Schlauchschalung eingebracht wird, die durch Beaufschlagen mit Druck gegen das Distanzelement gepreßt wird.

11. Verfahren nach Anspruch 10, **dadurch gekennzeichnet, daß** die Schlauchschalung nach Aushärten des Kunststoffmaterials entfernt wird.

12. Verfahren nach Anspruch 11, **dadurch gekennzeichnet, daß** die Schlauchschalung an ihrer Außenseite mit einem Trennmaterial beschichtet ist.

13. Verfahren nach einem der Ansprüche 10 bis 12, **dadurch gekennzeichnet, daß** die Schlauchschalung aus einem transparenten Kunststoffmaterial besteht.

## Claims

1. Method of renovating supply and disposal conduits and shafts in which an inliner and spacer elements are introduced into the conduit or the shaft and the annular space between the inliner and the wall of the conduit or shaft is filled with a setting composition, **characterised in that** a film tube is used as the inliner and the annular space is filled with a setting plastic material, which contains a blowing agent and 50 to 95% by wt. mineral fillers to form a closed cell structure.

2. Method as claimed in Claim 1, **characterised in that** the plastic material is introduced in a thickness of 3 to 30 mm, preferably 5 to 15 mm.

3. Method as claimed in one of the preceding claims, **characterised in that** a polyurethane, acrylate, epoxide or unsaturated polyester system is used as the plastic material.

4. Method as claimed in one of Claims 1 to 3, **characterised in that** the plastic material is set by radiation or heat.

5. Method as claimed in one of Claims 1 to 3, **characterised in that** the plastic material is chemically set.

6. Method as claimed in Claims 1 to 5, **characterised in that** the plastic material contains 50 to 95% by wt. mineral fillers.

7. Method as claimed in Claim 6, **characterised in that** quartz sand is used as the filler.

8. Method as claimed in one of Claims 1 to 7, **characterised in that** a film tube is used as the inliner which has outwardly directed small spacer protuberances which constitutes the spacer elements.

9. Method as claimed in one of Claims 1 to 7, **characterised in that** a reticulated tube with spacers or a spiral element is used as the spacer element.

10. Method as claimed in Claim 9, **characterised in that** a tubular sheath is introduced as the inliner, which is pressed against the spacer element by the action of pressure on it.

11. Method as claimed in Claim 10, **characterised in that** the tubular sheath is removed after setting of the plastic material.

12. Method as claimed in Claim 11, **characterised in that** the tubular sheath is coated on its outer surface with a release material.

13. Method as claimed in one of Claims 10 to 12, **characterised in that** the tubular sheath comprises a transparent plastic material.

## Revendications

1. Procédé pour l'assainissement de canalisations et de cuves d'alimentation et d'évacuation, dans lequel un revêtement intérieur et des éléments d'écartement sont disposés dans la canalisation ou la cuve, et l'espace annulaire entre le revêtement intérieur et la paroi de la canalisation ou de la cuve est rempli avec une masse durcissable, **caractérisé en ce qu'**on utilise comme revêtement intérieur un boyau en feuille mince et l'espace annulaire est rempli avec un matériau en matière plastique durcissable, qui contient pour la formation d'une structure à cellules fermées un agent gonflant et 50 à 95 % en poids de charges minérales.

2. Procédé selon la revendication 1, **caractérisé en ce que** le matériau en matière plastique est appliqué en une épaisseur de 3 à 30 mm, de préférence de 5 à 15 mm.

3. Procédé selon l'une des revendications précédentes, **caractérisé en ce qu'**on utilise comme matériau en matière plastique un système à base de polyuréthanne, d'acryle, d'époxyde ou de polyester insaturé.

4. Procédé selon l'une des revendications 1 à 3, **caractérisé en ce que** le matériau en matière plastique est durci par irradiation ou par la chaleur.

5. Procédé selon l'une des revendications 1 à 3, **caractérisé en ce que** le matériau en matière plastique est durci chimiquement.

6. Procédé selon l'une des revendications 1 à 5, **caractérisé en ce que** le matériau en matière plastique contient 50 à 95 % en poids de charges minérales.

7. Procédé selon la revendication 6, **caractérisé en ce qu'**on utilise comme charge du sable siliceux.

8. Procédé selon l'une des revendications 1 à 7, **caractérisé en ce qu'**on utilise comme revêtement intérieur un boyau en feuille mince qui présente en tant qu'éléments d'espacement des nopes d'écartement dirigées vers l'extérieur.

9. Procédé selon l'une des revendications 1 à 7, **caractérisé en ce qu'**on utilise comme élément d'espacement un boyau réticulaire muni d'éléments d'écartement ou un élément spiralé.

10. Procédé selon la revendication 9, **caractérisé en ce qu'**on applique comme revêtement intérieur un garnissage en boyau qui est plaqué par injection sous pression contre l'élément d'espacement.

11. Procédé selon la revendication 10, **caractérisé en ce que** le garnissage en boyau est éliminé après durcissement du matériau en matière plastique.

12. Procédé selon la revendication 11, **caractérisé en ce que** le garnissage en boyau est enduit sur sa face extérieure d'un matériau séparateur.

13. Procédé selon l'une des revendications 10 à 12, **caractérisé en ce que** le garnissage en boyau consiste en un matériau en matière plastique transparente.
